# EUROPEAN PATENT SPECIFICATION

(11) **EP 3 428 332 B1**
(45) Date of publication and mention of the grant of the patent: **16.09.2020**
(21) Application number: 17763211.4
(22) Date of filing: 07.03.2017
(51) Int. Cl.: D04H 3/04, D04H 3/16, D06C 23/04

(54) **FILAMENT NONWAVEN FABRIC HAVING WRINKLES AND METHOD FOR MANUFACTURING SAME**
FILAMENTVLIES MIT FALTEN UND VERFAHREN ZUR HERSTELLUNG DAVON
TISSU NON-TISSÉ À FILAMENTS AYANT DES CASSURES ET PROCÉDÉ DE FABRICATION DE CELUI-CI

(30) Priority: 07.03.2016 JP 2016043487
(43) Date of publication of application: 16.01.2019
(73) Proprietor: JXTG Nippon Oil & Energy Corporation, Chiyoda-ku Tokyo 100-8162 (JP)
(72) Inventor: IBAYASHI, Kunihiko, Tokyo 100-8162 (JP)
(74) Representative: Grünecker Patent- und Rechtsanwälte PartG mbB
(86) International application number: PCT/JP2017/008914
(87) International publication number: WO 2017/154871

(56) References cited:
- EP-A1- 2 692 924
- JP-A- S5 225 192
- JP-A- 2004 197 287
- JP-A- 2005 220 446
- JP-A- 2014 196 585

## Description

### TECHNICAL FIELD

The present invention relates to a wrinkled filament nonwoven fabric and to a method for manufacturing the wrinkled filament nonwoven fabric.

### BACKGROUND ART

As an example of a wrinkled filament nonwoven fabric, Patent Document 1 discloses a filament nonwoven fabric in which irregular convexo-concave wrinkles having extreme height differences are formed. According to Patent Document 1, a bag body is packed with a filament nonwoven fabric with no wrinkles formed therein and moist heat is given thereto so that wrinkles are formed in the filament nonwoven fabric. Patent Documents 2 and 3 disclose wrinkled filament nonwoven fabrics including a first set of wrinkles arranged in parallel and a second set of wrinkles also arranged in parallel. The second wrinkles do not intersect the first wrinkles, instead the wrinkles are spaced apart from one another.

### REFERENCE DOCUMENT LIST

### PATENT DOCUMENT

Patent Document 1: JP 2014-196585 A
Patent Document 2: JP 2004-197287
Patent Document 3: EP 2 692 924

### SUMMARY OF THE INVENTION

### PROBLEM TO BE SOLVED BY THE INVENTION

However, obtaining the wrinkled filament nonwoven fabric according to Patent Document 1 requires a step of packing the bag body with the filament nonwoven fabric with no wrinkles formed therein. This involves a problem that it is difficult to continuously produce filament nonwoven fabrics having wrinkles.

It is therefore an object of the present invention to provide a wrinkled filament nonwoven fabric allowing continuous production and a method for manufacturing the wrinkled filament nonwoven fabric allowing continuous production.

### MEANS FOR SOLVING THE PROBLEM

According to an aspect of the present invention, a wrinkled filament nonwoven fabric has a structure in which thermoplastic resin filaments are arrayed lengthwise and crosswise, and includes a plurality of first wrinkles arranged in parallel and a plurality of second wrinkles arranged in parallel, each of the plurality of second wrinkles intersecting at least one of the plurality of first wrinkles.

According to another aspect of the present invention, a method for manufacturing a wrinkled filament nonwoven fabric includes a first wrinkle forming step of forming a plurality of first wrinkles arranged in parallel on a filament nonwoven fabric having a structure in which thermoplastic resin filaments are arrayed lengthwise and crosswise, a second wrinkle forming step of forming a plurality of second wrinkles arranged in parallel on the filament nonwoven fabric subjected to the first wrinkle forming step, each of the plurality of second wrinkles intersecting at least one of the plurality of first wrinkles, and a dry heat treatment step of applying dry heat treatment to the filament nonwoven fabric subjected to the second wrinkle forming step so as to fix the plurality of first wrinkles and the plurality of second wrinkles.

### EFFECTS OF THE INVENTION

The plurality of first wrinkles and second wrinkles can be added to, for example, a long belt-shaped filament nonwoven fabric in the respective continuous steps. Therefore, according to the wrinkled filament nonwoven fabric, continuous production is relatively easy. Furthermore, the method for manufacturing a wrinkled filament nonwoven fabric allows the plurality of first wrinkles and second wrinkles to be added to, for example, a long belt-shaped filament nonwoven fabric continuously, and thus, it is possible to produce a wrinkled filament nonwoven fabric continuously.

### BRIEF DESCRIPTION OF THE DRAWINGS

FIG. 1 is a view illustrating a filament nonwoven fabric according to an embodiment of the present invention.
FIG. 2 is a view illustrating an example of a form of wrinkles of the filament nonwoven fabric.
FIG. 3 is a view illustrating a structure of a filament nonwoven fabric (untreated filament nonwoven fabric) manufactured through orthogonally laminated bonding.
FIG. 4 is a view illustrating an overview of an example of a manufacturing step of the filament nonwoven fabric according to the embodiment.

### MODE FOR CARRYING OUT THE INVENTION

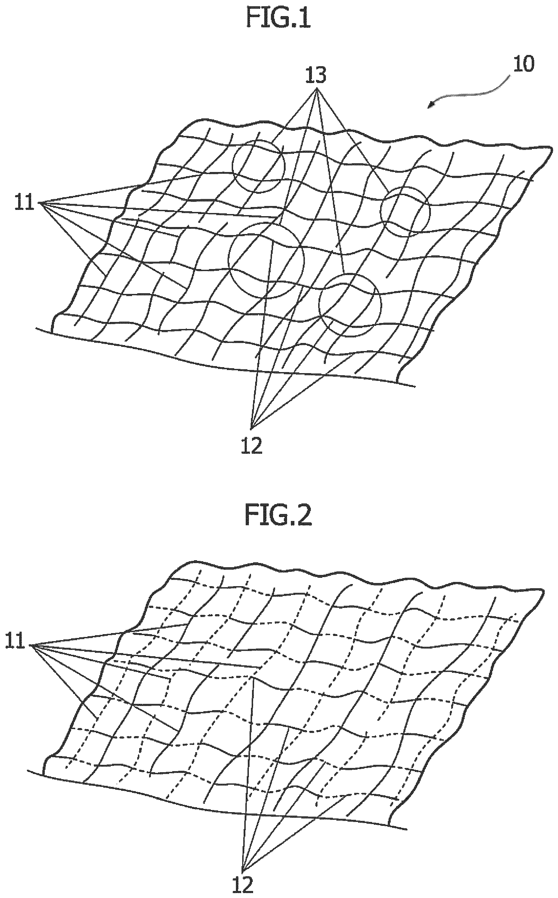

Hereinafter, an embodiment of the present invention will be described with reference to the accompanying drawings. FIG. 1 is a view illustrating a filament nonwoven fabric having wrinkles (hereinafter referred to as "a wrinkled filament nonwoven fabric") according to an embodiment of the present invention. The wrinkled filament nonwoven fabric 10 according to the embodiment includes a plurality of first wrinkles (folds) 11 arrayed in parallel and a plurality of second wrinkles (folds) 12 arrayed in parallel, each of the plurality of second wrinkles 12 intersecting at least one of the plurality of first wrinkles 11. Here, the "plurality of wrinkles arrayed in parallel" refers to a plurality of wrinkles extending in the same direction (not necessarily in the same direction in a strict sense, but may be mostly in the same direction) and arranged spaced apart from one another and includes a case in which wrinkles have different lengths from one another or a case in which wrinkles extend intermittently or the like. In the wrinkled filament nonwoven fabric 10, a plurality of rectangular regions 13 surrounded by a pair of first wrinkles 11 adjacent to each other and a pair of second wrinkles adjacent to each other are formed. Note that a plurality of rectangular regions 13 differing in size from one another are formed here, but without being limited to this, the plurality of rectangular regions 13 may have substantially the same size.

FIG. 2 is a view illustrating an example of the form of wrinkles (the plurality of first wrinkles 11 and the plurality of second wrinkles 12) of the wrinkled filament nonwoven fabric 10. In FIG. 2, convex mountain-like wrinkles (hereinafter referred to as "convex wrinkles") are represented by solid lines on the surface of the wrinkled filament nonwoven fabric 10 and concave valley-like wrinkles (hereinafter referred to as "concave wrinkles") are represented by broken lines on the surface of the wrinkled filament nonwoven fabric 10. As shown in FIG. 2, in the present embodiment, the first wrinkles 11 are formed as the convex wrinkles or the concave wrinkles. In the wrinkled filament nonwoven fabric 10, the first wrinkles 11 formed as the convex wrinkles and the first wrinkles 11 formed as the concave wrinkles are basically arranged alternately. In contrast, the second wrinkles 12 are formed as wrinkles that repeat convex wrinkle portions and concave wrinkle portions. More specifically, the second wrinkles 12 are formed so that the convex wrinkle portions and the concave wrinkle portions switched around at intersections between the first wrinkles 11 and the second wrinkles 12 as boundaries. Furthermore, in a pair of second wrinkles 12 adjacent to each other, the convex wrinkle portions and the concave wrinkle portions appear alternately in their extending directions. However, all the plurality of second wrinkles 12 need not always be formed as wrinkles having both the convex wrinkle portions and the concave wrinkle portions, but some second wrinkles 12 may be formed as the convex wrinkles or the concave wrinkles.

The wrinkled filament nonwoven fabric 10 is manufactured by applying predetermined wrinkling treatment to a filament nonwoven fabric having neither the first wrinkles 11 nor the second wrinkles 12, in other words, a filament nonwoven fabric before the first wrinkles 11 and the second wrinkles 12 are added (hereinafter, referred to as "untreated filament nonwoven fabric").

In the present embodiment, the untreated filament nonwoven fabric has a structure in which thermoplastic resin filaments are arrayed lengthwise and crosswise and the untreated filament nonwoven fabric is formed in advance in a long belt shape. The untreated filament nonwoven fabric can be manufactured using a spunbonding method, a meltblowing method, or orthogonally laminated bonding or the like, but the untreated filament nonwoven fabric is preferably manufactured through the orthogonally laminated bonding in particular. This is because the filament nonwoven fabric manufactured through the orthogonally laminated binding (hereinafter, referred to as "orthogonally laminated nonwoven fabric") has excellent features like being light-weight, having the ability to be made thin, having high tensile strength and having dimensional stability. For example, the orthogonally laminated nonwoven fabric may have a weight per unit area of 5 to 100 g/m² and a thickness of 50 to 130 µm, may have tensile strength in a lengthwise direction (longitudinal direction) of 25 to 300 [N/50 mm] and may have tensile strength in a crosswise direction of 10 to 90 [N/50 mm].

In the present embodiment, the orthogonally laminated nonwoven fabric used as the untreated filament nonwoven fabric may preferably have a weight per unit area of 5 to 100 g/m², more preferably 5 to 60 g/m² or further preferably 8 to 40 g/m². The smaller the weight per unit area, the poorer the ability to retain shape during bending work or the like becomes, and the greater the unit weight, the more bulkiness is lost, and thus, the weight per unit area of the untreated filament nonwoven fabric preferably may fall within the above range. Furthermore, the thickness of the untreated filament nonwoven fabric is, for example, 60 to 100 µm.

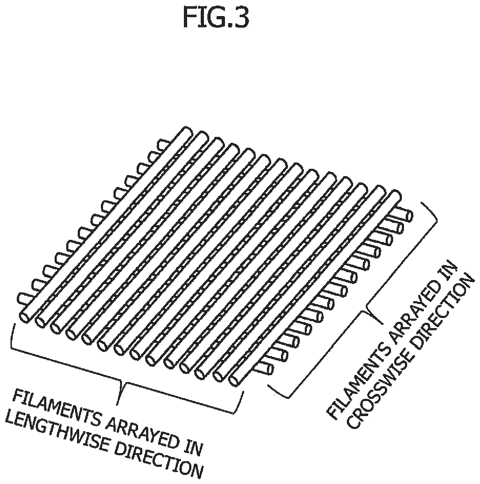

FIG. 3 illustrates an example of the structure of the orthogonally laminated nonwoven fabric as the untreated filament nonwoven fabric. The orthogonally laminated nonwoven fabric is mostly manufactured in the following procedure. First, filaments spun from the thermoplastic resin are arrayed in one direction and also extended to form a nonwoven fabric arrayed in one extending direction. Next, the two nonwoven fabrics arrayed in one extending direction are prepared and the two nonwoven fabrics arrayed in one extending direction are laminated so that filaments are orthogonal to each other. And then, the two laminated nonwoven fabrics arrayed in one extending direction are bound into one unit through thermocompression bonding or the like.

The thermoplastic resin needs only to be resin processable in a yarn form and is not particularly limited, and, for example, polyester (polyethylene terephthalate or the like), polyamide (nylon or the like), polyolefin (polypropylene, polyethylene or the like) may be used. Among them, polyester (polyethylene terephthalate in particular) is suitably used as the thermoplastic resin in terms of forming and maintaining wrinkles or the like. Furthermore, flame retardant polyester which is flame-retarded through for example, copolymerization of phosphor-based flame retardant components is used preferably as the thermoplastic resin. This is because it is possible to add flame retardancy to the untreated filament nonwoven fabric or the wrinkled filament nonwoven fabric 10 in advance. Note that, in the present embodiment, a fiber diameter of the filament is 0.1 to 100 µm. The fiber diameter is preferably 0.3 to 20 µm, and more preferably 1 to 10 µm.

As described above, the wrinkled filament nonwoven fabric 10 according to the embodiment is manufactured by applying predetermined wrinkling treatment to the untreated filament nonwoven fabric. That is, the method for manufacturing the wrinkled filament nonwoven fabric 10 according to the embodiment includes wrinkling treatment to the untreated filament nonwoven fabric.

The wrinkling treatment to the untreated filament nonwoven fabric need only be able to add permanent wrinkles to the untreated filament nonwoven fabric, and it is not particularly limited. The wrinkling treatment to the untreated filament nonwoven fabric according to the present embodiment includes a first wrinkle forming step of forming a plurality of first wrinkles 11 on the untreated filament nonwoven fabric in parallel, a second wrinkle forming step of forming a plurality of second wrinkles 12 on the filament nonwoven fabric subjected to the first wrinkle forming step in parallel, and a dry heat treatment step of fixing the formed first wrinkles 11 and second wrinkles 12 through dry heat treatment. The reason that the wrinkling treatment is configured to include the first wrinkle forming step, the second wrinkle forming step, and the dry heat treatment step is to make it possible to principally add wrinkles to the long belt-shaped untreated filament nonwoven fabric continuously, in other words, enable the wrinkled filament nonwoven fabrics 10 to be produced continuously. Fixing the formed wrinkles not through moist heat treatment but through dry heat treatment eliminates the need for a drying step or the like and also has a merit of inhibiting deterioration due to moist heat (degradation in strength due to, for example, hydrolysis). Hereinafter, the first wrinkle forming step, the second wrinkle forming step, and the dry heat treatment step will be described in order.

The first wrinkle forming step can be a step of forming the plurality of first wrinkles 11 extending in the longitudinal direction (need not be longitudinal direction in a strict sense, but may be mostly longitudinal direction) on the untreated filament nonwoven fabric by compressing the untreated filament nonwoven fabric in the width direction. Here, "compressing the untreated filament nonwoven fabric in the width direction" refers to pushing and contracting the untreated filament nonwoven fabric so as to generate the plurality of first wrinkles 11 on the untreated filament nonwoven fabric and includes keeping the untreated filament nonwoven fabric squeezed or twisted or causing the untreated filament nonwoven fabric to pass through a narrow passage or the like.

The first wrinkle forming step can be executed by operators and the like. For example, the operators grip, squeeze or twist the untreated filament nonwoven fabric to thereby contract the untreated filament nonwoven fabric in the width direction and form the plurality of first wrinkles 11 on the untreated filament nonwoven fabric. In this case, the operators and the like form the plurality of first wrinkles 11 and supply the filament nonwoven fabric in which the plurality of first wrinkles 11 are formed to the second wrinkle forming step. However, without being limited to such a step, the first wrinkle forming step may also be executed by a compression mechanism including a pair of compression rollers. In this case, the pair of compression rollers are arranged at an interval narrower than the width of the untreated filament nonwoven fabric. The compression mechanism drives rotation of at least one of the pair of compression rollers, causes the untreated filament nonwoven fabric to pass between the pair of compression rollers, thereby compresses the untreated filament nonwoven fabric in the width direction, forms the plurality of first wrinkles 11 and sends out (supplies) the filament nonwoven fabric in which the plurality of first wrinkles 11 are formed to the second wrinkle forming step.

The second wrinkle forming step can be a step of forming the plurality of second wrinkles 12 extending in the width direction (not necessarily the width direction in the strict sense, but may be mostly in the width direction) by bending (adding folds to) the filament nonwoven fabric subjected to the first wrinkle forming step at a plurality of locations in the longitudinal direction.

The second wrinkle forming step can be executed by a fold forming mechanism including, for example, a supplied section which is supplied with the filament nonwoven fabric subjected to the first wrinkle forming step and has a top surface functioning as a conveying path of the filament nonwoven fabric, and fold forming rollers disposed in the middle of the supplied section. The fold forming rollers each have a predetermined gap from the top surface (conveying surface) of the supplied section and are disposed so as to be orthogonal to the conveying direction of the filament nonwoven fabric. An outer circumferential surface of the fold forming roller is subjected to non-slip treatment and the predetermined gap is set to be smaller than the size in the thickness direction of the filament nonwoven fabric subjected to the first wrinkle forming step. The fold forming mechanism drives rotation of the fold forming roller so that the moving speed of the outer circumferential surface of the fold forming roller becomes lower (slower) than a supply speed at which the filament nonwoven fabric subjected to the first wrinkle forming step is supplied. The fold forming mechanism repeatedly causes the filament nonwoven fabric subjected to the first wrinkle forming step to slacken on the top surface (conveying surface) of the supplied section by a speed difference between the moving speed of the outer circumferential surface of the fold forming rollers and the conveying speed of the filament nonwoven fabric subjected to the first wrinkle forming step, compresses and bends the slackened portion using the fold forming rollers and conveys the resulting portion to the next step (the dry heat treatment step) in a downstream side. In this way, the filament nonwoven fabric subjected to the first wrinkle forming step is bent at a plurality of locations in the longitudinal direction to form the plurality of second wrinkles 12 and the filament nonwoven fabric in which the plurality of first wrinkles 11 and second wrinkles 12 are formed is conveyed to the dry heat treatment step. Note that a configuration may also be adopted in which a plurality of projections are provided spaced apart from one another in the circumferential direction on the outer circumferential surface of the fold forming rollers so that each projection pulls and slackens the filament nonwoven fabric subjected to the first wrinkle forming step.

The dry heat treatment step can be a step of applying the dry heat treatment by blowing hot air over the filament nonwoven fabric subjected to the second wrinkle forming step. However, the dry heat treatment step is not limited to such a step, and the dry heat treatment step may also be a step of causing the filament nonwoven fabric subjected to the second wrinkle forming step to pass through a heated atmosphere and thereby applying the dry heat treatment. In the dry heat treatment, the temperature of the hot air or the temperature in the atmosphere is assumed to be, for example, 200 to 260°C and the time period of the dry heat treatment can be assumed to be, for example, 1 to 10 minutes.

The dry heat treatment step can be executed by a transporting conveyor that conveys the filament nonwoven fabric subjected to the second wrinkle forming step and a dry heat treatment chamber disposed in the middle of the transporting conveyor. The dry heat treatment chamber includes, for example, a heater such as an electric heater and an air blower, and can be configured to blow air heated by the heater toward the filament nonwoven fabric subjected to the second wrinkle forming step by the air blower.

The untreated filament nonwoven fabric is subjected to the wrinkling treatment through the first wrinkle forming step, the second wrinkle forming step and the dry heat treatment step, and becomes the wrinkled filament nonwoven fabric 10 including the plurality of first wrinkles 11 and the plurality of second wrinkles 12.

The method for manufacturing a wrinkled filament nonwoven fabric according to the present embodiment may further include a winding step of winding the filament nonwoven fabric subjected to the dry heat treatment step, that is, the wrinkled filament nonwoven fabric 10 including the plurality of first wrinkles 11 and the plurality of second wrinkles 12.

The winding step can be a step of winding the filament nonwoven fabric subjected to the dry heat treatment step conveyed, for example, by the transporting conveyor in a roll shape using a winding roller. The winding step can be executed by a publicly known winding mechanism including the winding roller or the like. In this way, the wrinkled filament nonwoven fabric 10 including the plurality of first wrinkles 11 and the plurality of second wrinkles 12 is formed as a roll-shaped winding body.

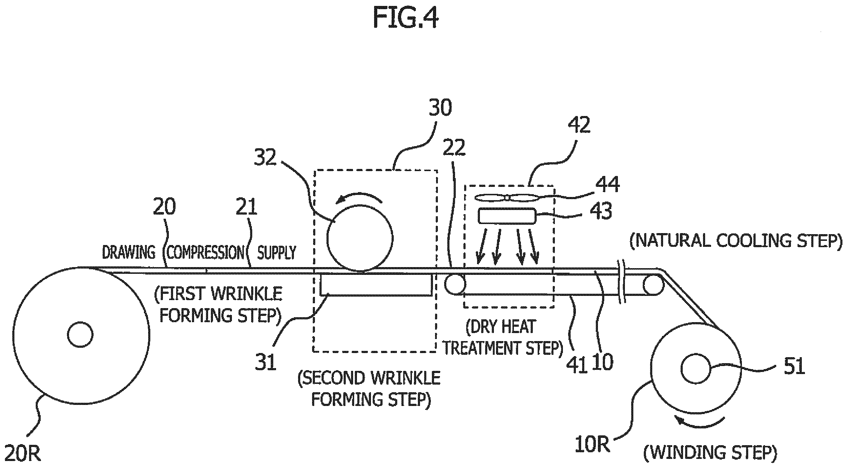

FIG. 4 illustrates an overview of an example of the manufacturing step of the wrinkled filament nonwoven fabric 10. In the example illustrated in FIG. 4, the operators and the like (not shown) draw the untreated filament nonwoven fabric 20 from a winding body 20R of the untreated filament nonwoven fabric 20, compress (for example, squeezes) the drawn untreated filament nonwoven fabric 20 in the width direction and forms a plurality of first wrinkles 11 (the first wrinkle forming step). Each of the formed first wrinkles 11 is the convex wrinkle or the concave wrinkle. The operators and the like supply the filament nonwoven fabric 21 in which the plurality of first wrinkles 11 are formed to a fold forming mechanism 30. The operators and the like preferably rotate the filament nonwoven fabric 21 in which the plurality of first wrinkles 11 are formed, by 90 degrees (that is, placed sideways) and supply the filament nonwoven fabric 21 to the fold forming mechanism 30.

As described above, the fold forming mechanism 30 includes a supplied section 31 which is supplied with the filament nonwoven fabric 21 in which the plurality of first wrinkles 11 are formed and has a top surface functioning as a conveying path of the filament nonwoven fabric, and a fold forming roller 32 disposed in the middle of the supplied section 31. While forming the second wrinkles 12 on the filament nonwoven fabric 21 in which the plurality of first wrinkles 11 are formed by a speed difference between the conveying speed of the filament nonwoven fabric 21 in which the plurality of first wrinkles 11 are formed and the moving speed of the outer circumferential surface of the fold forming roller 32, the fold forming mechanism 30 conveys the filament nonwoven fabric 21 toward a transport conveyor 41. In this way, the plurality of second wrinkles 12 are formed on the filament nonwoven fabric subjected to the first wrinkle forming step and then the filament nonwoven fabric 22 in which the plurality of first wrinkles 11 and second wrinkles 12 are formed is supplied to the transporting conveyor 41 (the second wrinkle forming step). Each of the formed second wrinkles 12 is a wrinkle principally having the convex wrinkle portion and the concave wrinkle portion.

The transporting conveyor 41 conveys the filament nonwoven fabric 22 in which the plurality of first wrinkles 11 and second wrinkles 12 are formed and causes the filament nonwoven fabric 22 to pass through a dry heat treatment chamber 42. As described above, the dry heat treatment chamber 42 is provided with a heater 43 and an air blower 44 and air heated by the heater 43 is blown by the blower 44 over the filament nonwoven fabric 22 in which the plurality of first wrinkles 11 and second wrinkles 12 are formed and which passes through the dry heat treatment chamber 42. This causes the plurality of first wrinkles 11 and the plurality of second wrinkles 12 to be fixed, producing the wrinkled filament nonwoven fabric 10 including the plurality of first wrinkles 11 and the plurality of second wrinkles 12 (the dry heat treatment step).

After that, the wrinkled filament nonwoven fabric 10 including the plurality of first wrinkles 11 and second wrinkles 12 is naturally cooled (natural cooling step) for a period during which the wrinkled filament nonwoven fabric 10 is conveyed by the transporting conveyor 41 from the dry heat treatment chamber 42 to the winding roller 51, and the cooled wrinkled filament nonwoven fabric 10 wound by a winding roller 51 in a roll shape and becomes a winding body 10R of the wrinkled filament nonwoven fabric 10 (the winding step).

Here, although the natural cooling step is provided between the dry heat treatment step and the winding step in the above example, a forced cooling step may also be provided instead of or in addition to the natural cooling step. The forced cooling step is a step of forcibly cooling the filament nonwoven fabric subjected to the dry heat treatment step, and can be a step of blowing air at, for example, approximately a normal temperature to 80°C (room temperature air or hot air) by the air blower over the wrinkled filament nonwoven fabric 10 conveyed from the dry heat treatment chamber 42. In addition, a spreading step of spreading the wrinkled filament nonwoven fabric 10 may be provided between the natural cooling step and the winding step or between the forced cooling step and the winding step. The spreading step is intended to allow the winding of the wrinkled filament nonwoven fabric 10 in the winding step to be performed more easily and more stably. The spreading step can be executed by operators or a pair of spreading rollers disposed so as to sandwich the wrinkled filament nonwoven fabric 10 in the thickness direction.

The wrinkled filament nonwoven fabric 10 manufactured in the respective steps described above has a weight per unit area of 5 to 100 g/m², tensile strength in the lengthwise direction (longitudinal direction) of 20 [N/50 mm] or more, tensile strength in the crosswise direction (width direction) of 10 [N/50 mm] or more. Furthermore, the wrinkled filament nonwoven fabric 10 has bulkiness (height from the plane surface to the top when placed on the plane surface) of 10 to 60 mm, which is 100 to 1000 times the thickness of the untreated filament nonwoven fabric.

The wrinkled filament nonwoven fabric 10 (including plurality of first wrinkles 11 and second wrinkles 12) according to the present embodiment may be naturally used alone or may also be used as part of laminated fabric made of a plurality of layers. In the laminated fabric using the wrinkled filament nonwoven fabric 10 as some layers (including both a single layer and a plurality of layers), many spaces are formed therein by the plurality of first wrinkles 11 and second wrinkles 12 of the wrinkled filament nonwoven fabric 10, and so heat-insulating property and heat-retaining property thereof improve. Furthermore, as described above, the wrinkled filament nonwoven fabric 10 is thin, light-weight and has relatively high strength. For this reason, the laminated fabric in which the wrinkled filament nonwoven fabric 10 is used as some layers can be suitable for use in multiple applications such as clothing, sleepwear, and curtains. Especially when the thermoplastic resin is a flame retardant resin (flame retardant polyester), the wrinkled filament nonwoven fabric 10 or the laminated fabric using the wrinkled filament nonwoven fabric 10 as some layers has flame retardancy and retains the flame retardant property for a long period of time without the need for flame retardant treatment such as application of flame retardant material or coating, and it is therefore suitable for use in applications requiring flame retardant property including curtains or wallpaper.

### REFERENCE SYMBOL LIST

- 10: Wrinkled filament nonwoven fabric
- 11: First wrinkles
- 12: Second wrinkles

## Claims

1. A wrinkled filament nonwoven fabric having a structure in which thermoplastic resin filaments are arrayed lengthwise and crosswise, comprising a plurality of first wrinkles arranged in parallel and a plurality of second wrinkles arranged in parallel, each of the plurality of second wrinkles intersecting at least one of the plurality of first wrinkles.

2. The wrinkled filament nonwoven fabric according to claim 1, wherein
the wrinkled filament nonwoven fabric is formed in a long belt shape,
each of the plurality of first wrinkles extends in a longitudinal direction of the wrinkled filament nonwoven fabric, and
each of the plurality of second wrinkles extends in a width direction of the wrinkled filament nonwoven fabric.

3. The wrinkled filament nonwoven fabric according to claim 1, comprising rectangular regions respectively surrounded by a pair of the first wrinkles adjacent to each other and a pair of the second wrinkles adjacent to each other.

4. The wrinkled filament nonwoven fabric according to claim 1, wherein
the first wrinkles are convex wrinkles which are convex on the surface of the wrinkled filament nonwoven fabric or concave wrinkles which are concave on the surface of the wrinkled filament nonwoven fabric, and
the second wrinkles are wrinkles alternately comprising convex wrinkle portions and concave wrinkle portions.

5. The wrinkled filament nonwoven fabric according to claim 1, wherein the thermoplastic resin is flame retardant resin.

6. The wrinkled filament nonwoven fabric according to claim 1, wherein the wrinkled filament nonwoven fabric has a structure in which two nonwoven fabrics arrayed in one extending direction are laminated and bonded so that filaments of the nonwoven fabrics are orthogonal to each other, the filaments spun from the thermoplastic resin being arrayed in one direction and being also extended.

7. The wrinkled filament nonwoven fabric according to any one of claims 1 to 6, wherein the wrinkled filament nonwoven fabric is formed as a roll-shaped winding body.

8. A method for manufacturing a wrinkled filament nonwoven fabric, comprising:
a first wrinkle forming step of forming a plurality of first wrinkles arranged in parallel on a filament nonwoven fabric having a structure in which thermoplastic resin filaments are arrayed lengthwise and crosswise;
a second wrinkle forming step of forming a plurality of second wrinkles arranged in parallel on the filament nonwoven fabric subjected to the first wrinkle forming step, each of the plurality of second wrinkles intersecting at least one of the plurality of first wrinkles; and
a dry heat treatment step of applying dry heat treatment to the filament nonwoven fabric subjected to the second wrinkle forming step so as to fix the plurality of first wrinkles and the plurality of second wrinkles.

9. The method for manufacturing a wrinkled filament nonwoven fabric according to claim 8, wherein
the filament nonwoven fabric is formed in a long belt shape,
each of the plurality of first wrinkles extends in a longitudinal direction of the filament nonwoven fabric, and
each of the plurality of second wrinkles extends in a width direction of the filament nonwoven fabric.

10. The method for manufacturing a wrinkled filament nonwoven fabric according to claim 8, wherein
the first wrinkles are convex wrinkles which are convex on the surface of the filament nonwoven fabric or concave wrinkles which are concave on the surface of the filament nonwoven fabric, and
the second wrinkles are wrinkles alternately comprising convex wrinkle portions and concave wrinkle portions.

11. The method for manufacturing a wrinkled filament nonwoven fabric according to claim 9, wherein
in the first wrinkle forming step, the plurality of first wrinkles are formed by compressing the filament nonwoven fabric in the width direction, and
in the second wrinkle forming step, the plurality of second wrinkles are formed by folding the filament nonwoven fabric subjected to the first wrinkle forming step at a plurality of locations in the longitudinal direction.

12. The method for manufacturing a wrinkled filament nonwoven fabric according to claim 8, wherein the thermoplastic resin is flame retardant resin.

13. The method for manufacturing a wrinkled filament nonwoven fabric according to claim 8, wherein the filament nonwoven fabric is an orthogonally laminated and bonded nonwoven fabric in which two nonwoven fabrics arrayed in one extending direction are laminated and bonded so that filaments of the nonwoven fabrics are orthogonal to each other, the filaments spun from the thermoplastic resin being arrayed in one direction and being also extended.

14. The method for manufacturing a wrinkled filament nonwoven fabric according to any one of claims 8 to 13, further comprising a winding step of winding the filament nonwoven fabric subjected to the dry heat treatment step in a roll shape.

## Patentansprüche

1. Vliesstoff mit gefalteten Filamenten, besitzend eine Struktur, in der thermoplastische Harzfilamente in Längs- und Querrichtung geordnet sind, umfassend eine Vielzahl von ersten Falten, die parallel angeordnet sind, und eine Vielzahl von zweiten Falten, die parallel angeordnet sind, wobei jede der Vielzahl von zweiten Falten mindestens eine der Vielzahl von ersten Falten schneidet.

2. Der Vliesstoff mit gefalteten Filamenten nach Anspruch 1, wobei
der Vliesstoff mit gefalteten Filamenten in Form eines langen Bandes geformt ist,
jede der Vielzahl von ersten Falten sich in Längsrichtung des Vliesstoffs mit gefalteten Filamenten erstreckt, und
jede der Vielzahl von zweiten Falten sich in Breitenrichtung des Vliesstoffs mit gefalteten Filamenten erstreckt.

3. Der Vliesstoff mit gefalteten Filamenten nach Anspruch 1, umfassend rechteckige Bereiche, die jeweils von einem nebeneinanderliegenden Paar der ersten Falten und einem nebeneinanderliegenden Paar der zweiten Falten umgeben sind.

4. Der Vliesstoff mit gefalteten Filamenten nach Anspruch 1, wobei
die ersten Falten konvexe Falten sind, die auf der Oberfläche des Vliesstoffs mit gefalteten Filamenten konvex sind, oder konkave Falten, die auf der Oberfläche des Vliesstoffs mit gefalteten Filamenten konkav sind, und
die zweiten Falten Falten sind, die abwechselnd konvexe Faltenabschnitte und konkave Faltenabschnitte umfassen.

5. Der Vliesstoff mit gefalteten Filamenten nach Anspruch 1, wobei das thermoplastische Harz ein flammhemmendes Harz ist.

6. Der Vliesstoff mit gefalteten Filamenten nach Anspruch 1, wobei der Vliesstoff mit gefalteten Filamenten eine Struktur besitzt, bei der zwei in einer Streckungsrichtung angeordnete Vliesstoffe so laminiert und verbunden sind, dass die Filamente der Vliesstoffe orthogonal zueinander sind, wobei die aus dem thermoplastischen Harz gesponnenen Filamente in einer Richtung angeordnet und auch gestreckt sind.

7. Der Vliesstoff mit gefalteten Filamenten nach einem der Ansprüche 1 bis 6, wobei der Vliesstoff mit gefalteten Filamenten als rollenförmiger Wickelkörper gebildet ist.

8. Verfahren zur Herstellung eines Vliesstoffs mit gefalteten Filamenten, umfassend:
einen ersten Faltenbildungsschritt zum Bilden einer Vielzahl von ersten Falten, die parallel auf einem Filament-Vliesstoff, besitzend eine Struktur, in der thermoplastische Harzfilamente in Längs- und Querrichtung geordnet sind, angeordnet werden;
einen zweiten Faltenbildungsschritt zum Bilden einer Vielzahl von zweiten Falten, die parallel auf dem Filament-Vliesstoff angeordnet werden, der dem ersten Faltenbildungsschritt unterzogen wurde, wobei jede der Vielzahl von zweiten Falten mindestens eine der Vielzahl von ersten Falten schneidet; und
einen Trockenwärmebehandlungsschritt des Anwendens einer Trockenwärmebehandlung auf den Filament-Vliesstoff, der dem zweiten Faltenbildungsschritt unterzogen wurde, um die Vielzahl der ersten Falten und die Vielzahl der zweiten Falten zu fixieren.

9. Das Verfahren zur Herstellung eines Vliesstoffs mit gefalteten Filamenten nach Anspruch 8, wobei
der Filament-Vliesstoff in Form eines langen Bandes ausgebildet wird,
jede der Vielzahl der ersten Falten sich in Längsrichtung des Filament-Vliesstoffes erstreckt, und
jede der Vielzahl der zweiten Falten sich in Breitenrichtung des Filament-Vliesstoffes erstreckt.

10. Das Verfahren zur Herstellung eines Vliesstoffs mit gefalteten Filamenten nach Anspruch 8, wobei
die ersten Falten konvexe Falten sind, die auf der Oberfläche des Filament-Vliesstoffes konvex sind, oder konkave Falten sind, die auf der Oberfläche des Filament-Vliesstoffes konkav sind, und
die zweiten Falten Falten sind, die abwechselnd konvexe Faltenabschnitte und konkave Faltenabschnitte umfassen.

11. Das Verfahren zur Herstellung eines Vliesstoffs mit gefalteten Filamenten nach Anspruch 9, wobei
im ersten Faltenbildungsschritt die Vielzahl der ersten Falten durch Zusammendrücken des Filament-Vliesstoffes in der Breitenrichtung gebildet wird, und
im zweiten Faltenbildungsschritt die Vielzahl der zweiten Falten durch Falten des dem ersten Faltenbildungsschritt unterzogenen Filament-Vliesstoffes an einer Vielzahl von Stellen in der Längsrichtung gebildet wird.

12. Das Verfahren zur Herstellung eines Vliesstoffs mit gefalteten Filamenten nach Anspruch 8, wobei das thermoplastische Harz ein flammhemmendes Harz ist.

13. Das Verfahren zur Herstellung eines Vliesstoffs mit gefalteten Filamenten nach Anspruch 8, wobei der Filament-Vliesstoff ein orthogonal laminierter und gebundener Vliesstoff ist, bei dem zwei in einer Streckungsrichtung geordnete Vliesstoffe so laminiert und gebunden werden, dass die Filamente der Vliesstoffe orthogonal zueinander sind, wobei die aus dem thermoplastischen Harz gesponnenen Filamente in einer Richtung geordnet und auch gestreckt werden.

14. Das Verfahren zur Herstellung eines Vliesstoffs mit gefalteten Filamenten nach einem der Ansprüche 8 bis 13, weiter umfassen einen Wickelschritt, bei dem der Filament-Vliesstoff, der dem Schritt der Trockenwärmebehandlung unterzogen wurde, zu einer Rolle gewickelt wird.

## Revendications

1. Tissu non-tissé à filaments avec cassures ayant une structure dans laquelle des filaments de résine thermoplastique sont disposés en longueur et en travers, comprenant une pluralité de premières cassures disposées en parallèle et une pluralité de secondes cassures disposées en parallèle, chacune de la pluralité de secondes cassures croisant au moins une de la pluralité de premières cassures.

2. Tissu non-tissé à filaments avec cassures selon la revendication 1, dans lequel le tissu non-tissé à filaments avec cassures est en formé de longue ceinture, chacune des nombreuses premières cassures s'étend dans une direction longitudinale du tissu non-tissé à filaments avec cassures, et
chacune de la pluralité des secondes cassures s'étend dans le sens de la largeur du tissu non-tissé à filaments avec cassures.

3. Tissu non-tissé à filaments avec cassures selon la revendication 1, comprenant des zones rectangulaires respectivement entourées par une paire de premières cassures adjacentes l'une à l'autre et une paire de secondes cassures adjacentes l'une à l'autre.

4. Tissu non-tissé à filaments avec cassures selon la revendication 1, dans lequel
les premières cassures sont des cassures convexes qui sont convexes à la surface du tissu non-tissé à filaments avec cassures convexes ou cassures concaves qui sont concaves à la surface du tissu non-tissé à filaments avec cassures, et
les secondes cassures sont des cassures comprenant alternativement des parties de cassures convexes et des parties de cassures concaves.

5. Tissu non-tissé à filaments avec cassures selon la revendication 1, dans lequel la résine thermoplastique est une résine ignifuge.

6. Tissu non-tissé à filaments avec cassures selon la revendication 1, dans lequel le tissu non-tissé à filaments avec cassures a une structure dans laquelle deux tissus non tissés disposés dans une direction d'extension sont laminés et liés de sorte que les filaments des tissus non tissés sont orthogonaux les uns par rapport aux autres, les filaments filés à partir de la résine thermoplastique étant disposés dans une direction et étant également étendus.

7. Tissu non-tissé à filaments avec cassures selon l'une des revendications 1 à 6, dans lequel le tissu non-tissé à filaments avec cassures est en forme de corps d'enroulement en forme de rouleau.

8. Procédé de fabrication d'un tissu non-tissé à filaments avec cassures, comprenant: une première étape de formation de cassures consistant à former une pluralité de premiers cassures disposés en parallèle sur un tissu non-tissé à filaments avec cassures ayant une structure dans laquelle des filaments de résine thermoplastique sont disposés dans le sens de la longueur et dans le sens de la largeur;
une seconde étape de formation de cassures consistant à former une pluralité de secondes cassures disposées en parallèle sur le tissu non-tissé à filaments avec cassures soumis à la première étape de formation de cassures, chacune de la pluralité de secondes cassures croisant au moins une de la pluralité de premières cassures; et
une étape de traitement thermique à sec consistant à appliquer un traitement thermique à sec au tissu non-tissé à filaments avec cassures soumis à la seconde étape de formation des cassures de manière à fixer la pluralité de premières cassures convexes et la pluralité de secondes cassures.

9. Procédé de fabrication d'un tissu non-tissé à filaments avec cassures selon la revendication 8, dans lequel
le tissu non-tissé à filaments avec cassures est en forme de longue ceinture,
chacune de la pluralité des premières cassures s'étend dans une direction longitudinale du tissu non-tissé à filaments avec cassures, et
chacune de la pluralité des secondes cassures s'étend dans le sens de la largeur du tissu non-tissé à filaments avec cassures.

10. Procédé de fabrication d'un tissu non-tissé à filaments avec cassures selon la revendication 8, dans lequel
les premiers cassures sont des cassures convexes qui sont convexes à la surface du tissu non-tissé à filaments avec cassures ou des cassures concaves qui sont concaves à la surface du tissu non-tissé à filaments avec cassures, et
les secondes cassures sont des cassures comprenant alternativement des parties de cassures convexes et des parties de cassures concaves.

11. Procédé de fabrication d'un tissu non-tissé à filaments avec cassures selon la revendication 9, dans lequel
dans la première étape de formation des cassures, la pluralité de premières cassures est formée en comprimant le tissu non-tissé à filaments avec cassures dans le sens de la largeur, et
dans la seconde étape de formation des cassures, la pluralité de secondes cassures est formée en pliant le tissu non-tissé à filaments avec cassures soumis à la première étape de formation des cassures à une pluralité d'endroits dans la direction longitudinale.

12. Procédé de fabrication d'un tissu non-tissé à filaments avec cassures selon la revendication 8, dans lequel la résine thermoplastique est une résine ignifuge.

13. Procédé de fabrication d'un tissu non-tissé à filaments avec cassures selon la revendication 8, dans lequel le tissu non-tissé à filaments avec cassures est un tissu non tissé stratifié et lié orthogonalement dans lequel deux tissus non-tissés disposés dans une direction d'extension sont stratifiés et liés de sorte que les filaments des tissus non-tissés sont orthogonaux les uns par rapport aux autres, les filaments filés à partir de la résine thermoplastique étant disposés dans une direction et étant également étendus.

14. Procédé de fabrication d'un tissu non-tissé à filaments avec cassures selon l'une quelconque des revendications 8 à 13, comprenant en outre une étape d'enroulement consistant à enrouler le tissu non-tissé à filaments avec cassures soumis à l'étape de traitement thermique à sec sous forme de rouleau.
